# EUROPEAN PATENT SPECIFICATION

(11) **EP 1 404 072 B1**
(45) Date of publication and mention of the grant of the patent: **21.03.2007**
(21) Application number: 03256156.5
(22) Date of filing: 30.09.2003
(51) Int. Cl.: H04L 12/56, H04L 12/28

(54) **Methods for identification of IEEE 802.11B radio signals**
Verfahren zur Identifizierung von IEEE802.11B-Funksignalen
Procédés pour l'identification des signaux radio de type IEEE 802.11B

(30) Priority: 30.09.2002 US 261977
(43) Date of publication of application: 31.03.2004
(73) Proprietor: INTEL CORPORATION, Santa Clara, CA 95052 (US)
(72) Inventor: Durrant, Randolph L., Colorado Springs, Colorado 80920 (US)
(74) Representative: Molyneaux, Martyn William

(56) References cited:
- EP-A- 1 225 709
- WO-A-01/76295
- US-A1- 2002 136 268

## Description

### FIELD OF THE INVENTION

This invention relates to wireless communications. In particular it relates to detecting an interference signal using a Bluetooth receiver.

### BACKGROUND

Bluetooth is a wireless local area network (WLAN) communications protocol that uses 79,1 MHz channels in the 2.4 to 2.4835 GHz industrial scientific and medical (ISM) band. A standard Bluetooth receiver is inherently capable of detecting signals in a 1 MHz bandwidth and centered on one of the 79 Bluetooth channel center frequencies.

The Institute of Electrical and Electronic Engineers (IEEE) WLAN communications protocol known as 802.11 b uses transmitters/interferers that occupy a 22 MHz bandwidth with 11 to 14 channel center frequencies within the 2.4 to 2.4835 GHz ISM band, depending upon the country of deployment. For example, in the US, 11 channels are used with three of them being most likely, due to their non-overlapping nature. The three non-overlapping channels recommended by the IEEE in the US are channels 1, 6, and 11. The corresponding frequencies of these channels are 2412 MHz, 2437MHz, and 2462 MHz, respectively.

IEEE 802.11 b operates in four data rate modes. These data rate modes include transmission rates of 1 Mega bit per second (Mbps), 2 Mbps, 5.5 Mbps, and 11 Mbps. In the first two modes, the data is direct sequence spread spectrum modulated by an 11 chip Barker code to an 11 Mega chip per second (MCPS) chip rate. The spread sequence is modulated onto a carrier using either differential binary phase shift keying (DBPSK) or differential quadrature phase shift keying (DQPSK). In the second two modes, the data is spread to an 11 MCPS chip rate using complementary code keying (CCK) and modulated onto carrier also using either quadrature phase shift keying (QPSK) or DQPSK.

Since IEEE 802.11 b signals may inherently interfere with the 79, 1 MHz Bluetooth channels, if a presence of interfering IEEE 802.11 b signals can be detected, the Bluetooth receiver can be operated to avoid those channels on which the 802.11 b signals are present. Thus, EP-A-1225709 discloses a method for frequency hopping which samples a plurality of channels in a frequency band and identifies each channel as a good channel or a bad channel, determines the size of a good window and the size of a bad window, and assigns a plurality of good channels to a good window and a plurality of bad channels to a bad window. However, a standard Bluetooth receiver is unable to demodulate a 22 MHZ wide 802.11 b signal since it only has a 1 MHz bandwidth.
According to a first aspect of this invention there is provided a method as claimed in claim 1 herein.
According to a second aspect of this invention there is provided a receiver as claimed in claim 10 herein.
Preferred features of the invention are defined by the dependent claims.

### BRIEF DESCRIPTION OF THE DRAWINGS

**Figure 1** shows a spectral curve of an 802.11 b signal;

**Figure 2** shows a high level bock diagram of a Bluetooth receiver in accordance with one embodiment of the invention;

**Figure 3** shows a spectral curve of another 802.11 b signal;

**Figure 4** shows a high level block diagram of another embodiment of a Bluetooth receiver in accordance with the invention;

**Figure 5** shows a spectral curve 500 of an 802.11 b signal being sampled at frequencies f₀ and f₁; and

**Figure 6** shows the outputs at frequencies f₀ and f₁ of an RSSI circuit for a Bluetooth receiver, wherein the output is sampled at different times in accordance with one embodiment of the invention.

### DETAILED DESCRIPTION

In the following description, for purposes of explanation, numerous specific details are set forth in order to provide a thorough understanding of the invention. It will be apparent, however, to one skilled in the art that the invention can be practiced without these specific details. In other instances, structures and devices are shown in block diagram form in order to avoid obscuring the invention.

Reference in this specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

Embodiments of the present invention provide techniques for detecting the presence of interfering 802.11b signals using a Bluetooth receiver. Once the interfering 802.11b signals are detected, the Bluetooth receiver may be operated to avoid those channels on which the 802.11b interference is detected.

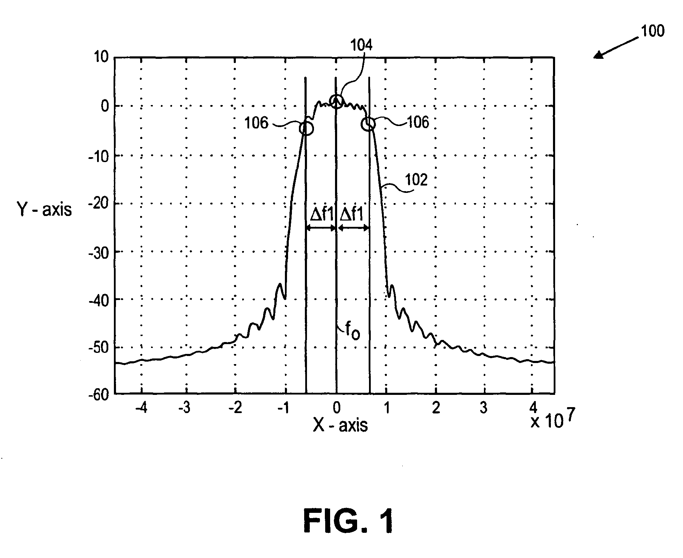

In one technique for using the Bluetooth receiver to detect an IEEE 802.11b signal, the spectral characteristics of the 802.11b signal are utilized in order to identify an 802.11b signal. Figure 1 of the drawings shows a chart 100 which shows the spectral characteristics of an 802.11b signal 102. The chart 100 plots signal strength on the y-axis against frequency on the x-axis. As will be seen, the 802.11b signal 102 has an energy peak 104 centered at frequency f₀. The energy of the signal 104 falls off on either side of the center frequency. For example a short distance Δ f₁ away from the center frequency f₀, it will be seen that the energy of the signal 102 falls to a value indicated by reference numeral 106.

As noted above, the characteristics of the spectral curve 102 are utilized in order to determine whether an 802.11b signal is present on a particular channel of a Bluetooth receiver. In accordance with this technique, a Bluetooth receiver is used to sample energies at selected frequencies within a frequency spectrum. For example, the Bluetooth receiver is used to sample energies at frequencies f₀, f₀ + Δ f₁, and f₀ - Δ f₁. The sampled energy levels are then compared to an energy distribution pattern that is representative of a wideband 802.11b signal. For example, the curve 102 shown in Figure 1 of the drawings would be representative of an energy distribution pattern for an 802.11b signal. If the sampled energy levels match the energy distribution pattern, then the presence of an 802.11b signal is identified.

In one embodiment, Δ f₁ is set at 5.5 MHz from the center frequency f₀ of the 802.11 b spectrum there will be a 3db drop in power from that measured at the center frequency f₀. This power drop will be valid for most 802.11b products. However, some manufacturers may use different modulation pulse shaping wave forms so that there may be some variation in this 3db value. A larger value fort f₁ may be used to gain a 6db drop. Thus, in one embodiment of the present invention, energy is searched for at frequencies f₀, f₀+ Δ f₁, and f₀ - Δ f₁. The standard Bluetooth RSSI (Received Signal Strength Indicator) function is used to measure the power level received at an 802.11b center frequency and the two symmetric frequency points around the center, for example at a Δ f₁ = 5.5 MHz from the center frequency. If the power levels at the two symmetric frequencies are found to be proportionately lower than the power at the center frequency according to the spectral roll off of the 802.11b spectral curve 102 (see Figure 1 of the drawings), then an 802.11b signal is likely to be present.

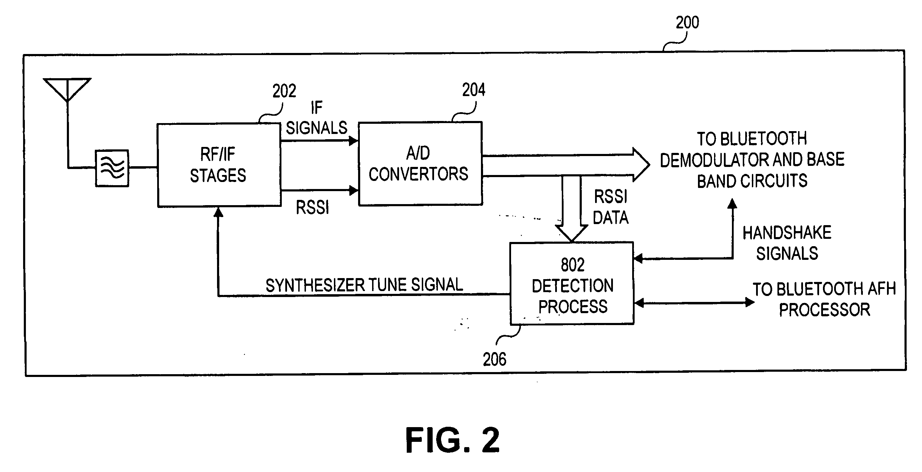

Figure 2 of the drawings shows a block diagram of a Bluetooth receiver, in accordance with one embodiment, that may be used to implement the techniques described with reference to Figure 1. The Bluetooth receiver 200 includes a component 202 which is used to sample energy levels at the selected frequencies f₀, f₀+ Δ f₁, and f₀- Δ f₁ within the 2.4 GHz frequency spectrum. The component 202 is capable of receiving radio frequency (RF) signals and converting them to intermediate frequency (IF) signals which are fed to an analog to digital (A/D) converter 204. A component 206 is used to compare the sampled signals to an energy distribution pattern in the form of an 802.11b spectral emission curve 102, as can be seen in Figure 1 of the drawings, to identify the presence of the 802.11b signal. The component 206 thus executes an 802.11b detection process which includes tuning the component 202 to receive signals at the frequency f₀ centered on an 802.11b center frequency and at the frequencies f₀, f₀+ Δ f₁, and f₀- Δ f₁. The component 206 communicates with an adaptive frequency hopping (AFH) processor to enable frequency hopping wherein any channels on which 802.11b interference has been detected are avoided.

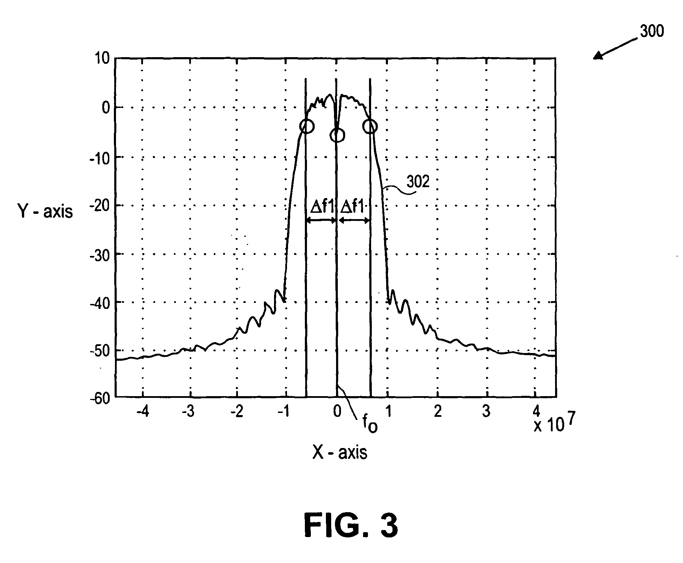

Figure 3 of the drawings shows a chart 300 which includes another example of an energy distribution curve 302 for an 802.11b signal. It will be seen that in the curve 302, there is a null at the channel center frequency f₀. This null is present at the center frequency of a non-CCK modulated 802.11b signal. Thus, in one embodiment, if power levels at the center frequency f₀ and at the symmetric points f₀+ Δ f₁, and f₀ - Δ f₁ match the energy levels as per curve 302 then an 802.11b signal may be confirmed. To determine the presence of the null, the 1 MHz bandwidth IF signal of the Bluetooth receiver is digitized and the spectrum measured using a Fourier Transform algorithm such as the Fast Fourier transform (FFT) algorithm. With high enough resolution, the frequency null can be measured and an 802.11b signal identified. The null in the 802.11b signal is only present when an 802.11b transmitter is transmitting in the 1 Mbps mode or in 2 Mbps mode. Measurements indicate that the null may not be present for reasonable resolution bandwidth when an 802.11b signal is being transmitted in the 5.5 Mbps mode or the 11 Mbps mode.

Every 802.11b device transmits in the 1 Mbps mode or the 2 Mbps mode during the first portion of each packet known as the preamble or header. There are two preambles/headers in 802.11b these are known as the long preamble and the short preamble modes. In the long preamble mode, the preamble/header will last for 192 microseconds and in the short preamble mode, the preamble/header will last for 96 microseconds. Further, the remainder of the packet may be transmitted in 1 Mbps, 2 Mbps, 5.5 Mbps, or 11 Mbps mode. The notch in the 802.11b signal may only be detected when transmitting in the 1 or 2 Mbps mode.

Resolution of the spectral notch may be accomplished with a detection bandwidth of around 100 KHz or less. Assuming that the IF signal is sampled at a 2 MHz rate, a 32 bit FFT length will yield 62.5 KHz - per bin. This will be sufficient for resolving the spectral notch null. If higher sampling rates are used, the FFT length would need to be increased.

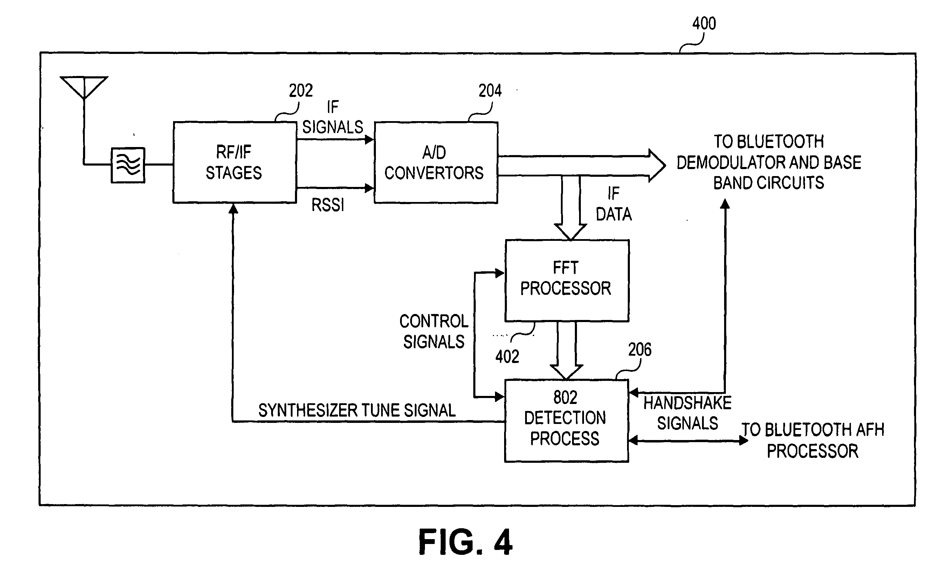

Figure 4 of the drawings shows a block diagram of a Bluetooth receiver which may be used to detect the center null. The Bluetooth receiver 400 is similar to the Bluetooth receiver 200 and therefore the same reference numerals have been used to identify the same or similar components. One difference is that the receiver 400 includes a FFT processor 402 has been added to perform the FFT transform.

In another embodiment of the present invention, an 802.11b signal may be detected by operating a Bluetooth receiver to receive a plurality of signals on a particular channel, to measure timing information related to the signals, and to determine a source of the signals based on the timing information. This technique is based on the fact that timing characteristics of an 802.11b signal are different from timing characteristics of other signals, such as a Bluetooth signal. For example, when a node in a wireless network is transmitting 802.11b signals then the data packets will be around 1,300 microseconds long for a 1,500 byte payload and the packets will be repeated about every 1800 microseconds. If a node is receiving 802 data signals then an automatic repeat request (ARQ) packet is transmitted from that node. The length of the transmitted ARQ signal is around 100 microseconds and is transmitted after each data packet is received.

When a node is transmitting a beacon signal, packet lengths are around 100 microseconds and will repeat every 100 milliseconds.

A Bluetooth node transmitting data packets will transmit for around 2800 microseconds and will be repeated about every 3,750 microseconds. A Bluetooth node receiving data packets will transmit a response for around 366 microseconds and will be repeated about every 3,750 microseconds.

Thus, it will be appreciated that by measuring the packet timing characteristics of a received signal, the signal may be classified as being an 802.11b signal, a 802 ARQ signal, an 802 beacon signal, a Bluetooth data signal , or a Bluetooth response signal. Packet lengths may be determined by a 1 MHz bandwidth Bluetooth receiver by measuring the duration of the signal envelope at the output of the RSSI circuit. Thus, in one embodiment, when packet timing information is such that packets are around 1,300 microseconds long and are repeated every 1,800 microseconds, an 802.11 b signal is declared.

In another embodiment, the invention provides a Bluetooth receiver comprising a component to receive a plurality of signals on a particular channel; a component to measure timing information relating to the signals; and a component to determine a source of the signals based on the timing information. The component to receive the signals, the component to measure the timing information, and the component to determine the source of the signals may not all be the same component and, according to different embodiments, may be implemented in hardware, software or firmware.

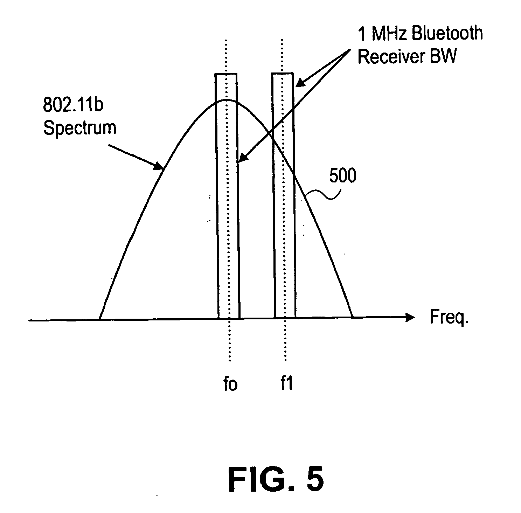

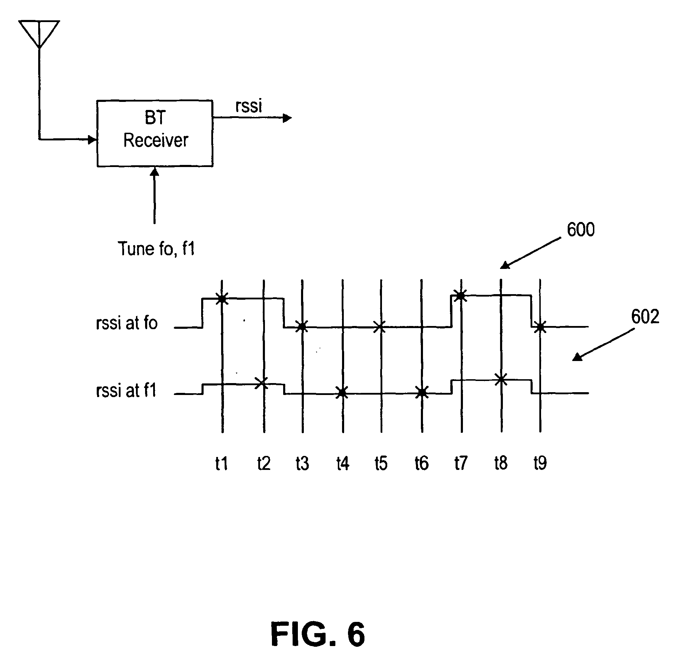

In one embodiment, the technique that uses packet timing information may be combined with the technique that uses the spectral characteristics of the 802.11b signal so that in addition to determining packet timing information, measurements at a frequency channel spaced a small distance in frequency (for example 5 MHz) from a channel center are taken. If the same behavior is observed, but at a lower level, a wideband signal has been identified and confidence that this is an 802.11b signal is increased. This embodiment is illustrated in Figure 5. Referring to Figure 5, reference numeral 500 shows the spectral curve for an 802.11b signal. The signal is sampled at frequencies f₀ and f₁, wherein the output of the RSSI circuit is sampled at different times eg. t₁ to t₉ and at frequencies f₀ and f₁. This is illustrated in Figure 6 of the drawings where reference numeral 600 and 602 shows the output of the RSSI circuit at frequencies f₀ and f₁, respectively.

In another embodiment, the bandwidth of the standard Bluetooth receiver is expanded so that it is able to differentially demodulate and detect the 802.11b SYNC word. The 802.11b signal can be identified by correlating the long 128 bit SYNC word or the short 56 bit SYNC word contained in the 1 Mbps DBPSK encoded preamble. This method requires the addition of a 22 MHz IF section, a Barker code demodulator/de-spreader, a differential decoder, a bit descrambler, and a SYNC word correlator circuit. In accordance with different embodiments, the correlator circuit may be implemented in hardware, software, or firmware.

In a further embodiment, a 1 MHz bandwidth tag signal is added to an 802.11b signal. A short code, for example an 8 bit code may be appended at the beginning or end an 802.11b signal preamble. The bit pattern, at a rate of 0.5 Mbps, can be DBPSK modulated onto a carrier but not spread by the 11 Mcps Barker code sequence. This will produce a 1 MHz bandwidth signal, which can be processed through a 1 MHz bandwidth Bluetooth receiver. The Bluetooth receiver differentially demodulates the signal and recognizes the 8 bit code. This identifies a signal as coming from an 802.11b radio.

One advantage of the present invention is that it allows a Bluetooth radio to identify the presence of an 802.11b interference signal. Once an interfering 802.11b signal is detected, the Bluetooth receiver is able to use adaptive frequency hopping (AFH) techniques to avoid the 802.11b interference. Existing techniques do not measure the presence of 802.11b interference but rather, treat all interferers the same by detecting the presence of energy in each of the 79 Bluetooth channels.

Although the present invention has been described with reference to specific exemplary embodiments, it will be evident that the various modification and changes can be made to these embodiments without departing from the broader scope of the invention as set forth in the claims. Accordingly, the specification and drawings are to be regarded in an illustrative sense rather than in a restrictive sense.

## Claims

1. A method for operating a Bluetooth receiver, the method comprising:
sampling energy levels at multiple selected frequencies within one or more channels within a frequency spectrum;
comparing the sampled energy levels for the one or more channels to an energy distribution pattern for a wideband signal; and
identifying a presence of the wideband signal if the sampled energy levels for the one or more channels match the energy distribution pattern for the wideband signal.

2. The method of claim 1, wherein the wideband signal is an 802.11x signal.

3. The method of claim 2, wherein the sampling energy levels at multiple selected frequencies comprises
sampling the energy levels at a channel center frequency of the 802.11x signal, and at symmetric points on either side of the channel center frequency.

4. The method of claim 3, wherein the energy distribution pattern comprises an energy peak centered on the channel center frequency of the 802.11x signal and equal energy levels less than the peak at the symmetric points.

5. The method of claim 3, wherein the energy levels comprise a reduced energy level at the channel center frequency of the 802.11x signal and elevated energy levels at the symmetric points.

6. The method of claim 1 including:
receiving a plurality of signals on a particular channel;
measuring timing information relating to the signals; and
determining a source of the signals based on the timing information.

7. The method of claim 6, wherein the timing information comprises a duration of each signal.

8. The method of claim 7, wherein the timing information comprises:
a period between signals.

9. The method of claim 6, wherein determining the source comprises determining the source to be an 802-11x transmitter if the signals are
about 1300 microseconds long and are repeated about every 1800 microseconds.

10. A Bluetooth receiver **characterised by**:
a component(202) arranged to sample energy levels ar multiple selected frequencies for each of one or more channels within a frequency spectrum;
a component (206) arranged to compare the sampled energy levels at the multiple selected frequencies for each of the one or more channels to an energy distribution pattern for a wideband signal; and
arranged to identify the presence of the wideband signal being arranged to determine if the multiple sampled energy levels for the one or more channels match the energy distribution pattern; and which is coupled with the component arranged to sample the energy levels.

11. The receiver of claim 10, wherein the wideband signal is an 802.11x signal.

12. The receiver of claim 11 including:
a component to receive a plurality of signals on a particular channel;
a component to measure timing information relating to the signals; and
a component to determine a source of the signals based on the timing information.

13. The receiver of claim 12, wherein the timing information comprises the duration of each signal.

14. The receiver of claim 12, wherein the timing information comprises a period between signals.

## Patentansprüche

1. Verfahren zum Betrieb eines Bluetooth-Empfängers, wobei das Verfahren folgendes umfasst:
das Abtasten von Energiewerten auf mehreren ausgewählten Frequenzen innerhalb eines oder mehrerer Kanäle eines Frequenzspektrums;
das Vergleichen der abgetasteten Energiewerte für den einen oder die mehreren Kanäle mit einem Energieverteilungsmuster für ein Breitbandsignal; und
das Identifizieren der Präsenz des Breitbandsignals, wenn die abgetasteten Energiewerte für den einen oder die mehreren Kanäle mit dem Energieverteilungsmuster für das Breitbandsignal übereinstimmen.

2. Verfahren nach Anspruch 1, wobei es sich bei dem Breitbandsignal um ein 802.11x-Signal handelt.

3. Verfahren nach Anspruch 1, wobei das Abtasten von Energiewerten auf mehreren ausgewählten Frequenzen folgendes umfasst:
das Abtasten der Energiewerte auf einer Kanalmittenfrequenz des 802.11x-Signals und an symmetrischen Punkten auf jeder Seite der Kanalmittenfrequenz.

4. Verfahren nach Anspruch 3, wobei das Energieverteilungsmuster eine Energiespitze aufweist, die auf der Kanalmittenfrequenz des 802.11x-Signals zentriert ist und mit übereinstimmenden Energiewerten, die niedriger sind als die Spitze an den symmetrischen Punkten.

5. Verfahren nach Anspruch 3, wobei die Energiewerte folgendes umfassen:
einen reduzierten Energiewert auf der Kanalmittenfrequenz des 802.11x-Signals und erhöhte Energiewerte an den symmetrischen Spitzen.

6. Verfahren nach Anspruch 1, wobei dieses folgendes aufweist:
das Empfangen einer Mehrzahl von Signalen auf einem bestimmten Kanal;
das Messen von Taktungsinformationen, die sich auf die Signale beziehen; und
das Bestimmen einer Quelle der Signale auf der Basis der Taktungsinformationen.

7. Verfahren nach Anspruch 6, wobei die Taktungsinformationen eine Dauer jedes Signals umfassen.

8. Verfahren nach Anspruch 7, wobei die Taktungsinformationen folgendes umfassen:
eine Periode zwischen Signalen.

9. Verfahren nach Anspruch 6, wobei das Bestimmen der Quelle das Bestimmen der Quelle als einen 802.11x-Sender umfasst, wenn die Signale etwa 1300 Mikrosekunden lang sind und etwa alle 1800 Mikrosekunden wiederholt werden.

10. Bluetooth-Empfänger, **gekennzeichnet durch**:
eine Komponente (202), die so angeordnet ist, dass sie Energiewerte auf mehreren ausgewählten Frequenzen innerhalb eines oder mehrerer Kanäle eines Frequenzspektrums abtastet;
eine Komponente (206), die so angeordnet ist, dass sie die abgetasteten Energiewerte auf den mehreren ausgewählten Frequenzen für den einen oder jeden der mehreren Kanäle mit einem Energieverteilungsmuster für ein Breitbandsignal vergleicht; und wobei sie ferner so angeordnet ist, dass sie die Präsenz des Breitbandsignals identifiziert, wobei sie so angeordnet ist, dass sie bestimmt, ob die mehreren abgetasteten Energiewerte für den einen oder die mehreren Kanäle mit dem Energieverteilungsmuster übereinstimmen; und wobei sie mit der Komponente gekoppelt ist, die zum Abtasten der Energiewerte angeordnet ist.

11. Empfänger nach Anspruch 10, wobei es sich bei dem Breitbandsignal um ein 802.11x-Signal handelt.

12. Empfänger nach Anspruch 11, wobei dieser folgendes aufweist:
eine Komponente zum Empfangen mehrerer Signale auf einem bestimmten Kanal;
eine Komponente zum Messen von Taktungsinformationen, die sich auf die Signale beziehen; und
eine Komponente zum Bestimmen einer Quelle der Signale auf der Basis der Taktungsinformationen.

13. Empfänger nach Anspruch 12, wobei die Taktungsinformationen die Dauer jedes Signals umfassen.

14. Empfänger nach Anspruch 12, wobei die Taktungsinformationen eine Periode zwischen Signalen umfassen.

## Revendications

1. Procédé pour utiliser un récepteur Bluetooth, le procédé comprenant les étapes consistant à :
échantillonner des niveaux d'énergie à de multiples fréquences sélectionnées dans un ou plusieurs canaux dans un spectre de fréquences ;
comparer les niveaux d'énergie échantillonnés pour le ou les canaux à un modèle de distribution d'énergie pour un signal à large bande ; et
identifier une présence du signal à large bande si les niveaux d'énergie échantillonnés pour le ou les canaux correspondent au modèle de distribution d'énergie pour le signal à large bande.

2. Procédé selon la revendication 1, dans lequel le signal à large bande est un signal 802.11x.

3. Procédé selon la revendication 2, dans lequel l'échantillonnage de niveaux d'énergie à de multiples fréquences sélectionnées comprend les étapes consistant à :
échantillonner les niveaux d'énergie à une fréquence centrale de canal du signal 802.11x, et à des points symétriques sur un côté de la fréquence centrale de canal.

4. Procédé selon la revendication 3, dans lequel le modèle de distribution d'énergie comprend un pic d'énergie centré sur la fréquence centrale de canal du signal 802.11x et est égal aux niveaux d'énergie moins le pic aux points symétriques.

5. Procédé selon la revendication 3, dans lequel les niveaux d'énergie comprennent :
un niveau d'énergie réduit à la fréquence centrale de canal du signal 802.11x et des niveaux d'énergie élevés aux points symétriques.

6. Procédé selon la revendication 1, comprenant les étapes consistant à :
recevoir une pluralité de signaux sur un canal donné ;
mesurer les informations de temporisation concernant les signaux ; et
déterminer une source des signaux sur la base des informations de temporisation.

7. Procédé selon la revendication 6, dans lequel les informations de temporisation comprennent la durée de chaque signal.

8. Procédé selon la revendication 7, dans lequel les informations de temporisation comprennent une période entre les signaux.

9. Procédé selon la revendication 6, dans lequel la détermination de la source comprend l'étape consistant à déterminer la source comme étant un émetteur 802.11x si les signaux ont une durée d'environ 1300 microsecondes et sont répétés environ toutes les 1800 microsecondes.

10. Récepteur Bluetooth **caractérisé par** :
un composant (202) agencé pour échantillonner des niveaux d'énergie à de multiples fréquences sélectionnées pour chacun d'un ou de plusieurs canaux dans un spectre de fréquences ;
un composant (206) agencé pour comparer les niveaux d'énergie échantillonnés aux multiples fréquences sélectionnées pour chacun du ou des canaux à un modèle de distribution d'énergie pour un signal à large bande ; et agencé pour identifier la présence du signal à large bande agencé pour déterminer si les multiples niveaux d'énergie échantillonnés pour le ou les canaux correspondent au modèle de distribution d'énergie ; et qui est couplé au composant agencé pour échantillonner les niveaux d'énergie.

11. Récepteur selon la revendication 10, dans lequel le signal à large bande est un signal 802.11x.

12. Récepteur selon la revendication 11, comprenant :
un composant pour recevoir une pluralité de signaux sur un canal donné ;
un composant pour mesurer les informations de temporisation concernant les signaux; et
un composant pour déterminer une source des signaux sur la base des informations de temporisation.

13. Récepteur selon la revendication 12, dans lequel les informations de temporisation comprennent la durée de chaque signal.

14. Récepteur selon la revendication 12, dans lequel les informations de temporisation comprennent une période entre les signaux.
